# EUROPÄISCHE PATENTSCHRIFT

(11) **EP 0 944 221 B1**
(45) Veröffentlichungstag und Bekanntmachung des Hinweises auf die Patenterteilung: **27.10.2010**
(21) Anmeldenummer: 99103720.1
(22) Anmeldetag: 25.02.1999
(51) Int. Cl.: H04M 1/72

(54) **Kommunikationseinrichtung und Verfahren zu deren Betriebssteuerung**
Communication device and method for operating the same
Appareil de communication et méthode de commande du fonctionnement de cet appareil

(30) Priorität: 18.03.1998 DE 19811853
(43) Veröffentlichungstag der Anmeldung: 22.09.1999
(73) Patentinhaber: Nokia Corporation, 02150 Espoo (FI)
(72) Erfinder: Joeressen, Olaf Johannes, 40235 Düsseldorf (DE); Schetelig, Markus, 45131 Essen (DE)
(74) Vertreter: Becker Kurig Straus

(56) Entgegenhaltungen:
- EP-A- 0 473 465
- US-A- 5 150 361

## Beschreibung

Die Erfindung betrifft ein Verfahren zum Steuern einer Kommunikationseinrichtung, die eine Hauptbetriebseinheit und eine Untereinheit aufweist, sowie eine Kommunikationseinrichtung, insbesondere ein Untermodul einer mobilen Telekommunikationseinheit, das während regelmäßiger wiederkehrender Zeitschlitze mit einem Hauptmodul Daten austauscht.

Bei einer Kommunikationseinrichtung, insbesondere bei einer mobilen Telekommunikationseinheit, deren Spannungsversorgung mit Hilfe einer Batterie oder eines wiederaufladbaren Akkumulators erfolgt, ist es erforderlich, den Energieverbrauch möglichst gering zu halten, um eine möglichst lange Betriebsdauer der Batterie oder des Akkus und damit eine möglichst lange Betriebsbereitschaft der Kommunikationseinrichtung zu gewährleisten. Hierzu wird die Kommunikationseinrichtung üblicherweise während Leerlaufzeiten, also während Zeiten, in denen keine Betriebsfunktionen benötigt werden, in einen Bereitschaftszustand oder Energiesparmodus versetzt, in dem nur die Schaltungseinrichtungen mit Strom versorgt werden, die erforderlich sind, um bei Bedarf die volle Funktionsfähigkeit der Kommunikationseinrichtung wiederherzustellen.

Üblicherweise werden daher schnelle Taktgeneratoren abgeschaltet, während die einzelnen Funktionsblöcke weiterhin mit einer geregelten Spannung versorgt werden, um die in den einzelnen Speichern der Funktionsblöcke enthaltenen Betriebszustandsdaten gespeichert zu halten.

EP 0 473 465 A1 offenbart zum Beispiel ein Verfahren zum Verringern des Stromverbrauchs für Mobiltelefone. Mobiltelefone im Bereitschaftsmodus werden durch jeweilige Basisstationen mittels individuelle oder globale Nachrichten über das Erfordernis informiert den Bereitschaftsmodus zu verlassen um zum Beispiel einen Telefonanruf zu empfangen. Das Verfahren zum Verringern des Stromverbrauchs nach EP 0 473 465 A1 sieht nun vor, dass ein Mobiltelefon im Bereitschaftsmodus bei Empfang einer Nachricht prüft, ob diese Nachricht für dieses oder ein anderes Mobiltelefon bestimmt ist, und, wenn die Nachricht für ein anderes Mobiltelefon bestimmt ist, der Stromverbrauch durch Deaktivieren elektronischer Einheiten des Mobiltelefons für eine Zeitperiode reduziert wird. Die Zeitperiode bestimmt sich hierbei aus einer Berechnung des Zeitpunkts, zu dem eine nächste Nachricht durch das Mobiltelefon zu erwarten ist. Deaktivierbare elektronische Einheiten können zum Beispiel den Empfänger, das Display und den Mikroprozessor des Mobiltelefons umfassen.

Hierdurch lässt sich zwar der Energieverbrauch der Kommunikationseinrichtung im Bereitschaftszustand deutlich senken, für Kommunikationseinrichtungen, die einen extrem niedrigen Energieverbrauch aufweisen müssen, da sie nur sehr kleine Batterien oder Akkumulatoren verwenden können, ist diese Energieeinsparung jedoch nicht ausreichend.

Davon ausgehend liegt der Erfindung die Aufgabe zugrunde, ein Verfahren zum Steuern einer Kommunikationseinrichtung bereitzustellen, das einen extrem niedrigen Energieverbrauch und damit eine sehr lange Betriebsdauer der Spannungsquelle ermöglicht. Außerdem ist es die Aufgabe der Erfindung eine nach diesem Verfahren steuerbare Kommunikationseinrichtung zu schaffen.

Erfindungsgemäß wird diese Aufgabe durch ein Verfahren zum Steuern einer Kommunikationseinrichtung mit einer Hauptbetriebseinheit und einer Untereinheit gelöst, bei dem nach einer Betriebsperiode Betriebszustandsdaten der Hauptbetriebseinheit in einem Statusspeicher der Untereinheit gespeichert werden und die Spannungsversorgung der Hauptbetriebseinheit abgeschaltet wird, um die Kommunikationseinrichtung in einen Energiesparmodus zu versetzen. Die Spannungsversorgung der Hauptbetriebseinheit wird nach Ablauf einer jeweils vorgegebenen Wartezeit mittels eines Einschaltsignals von der Untereinheit eingeschaltet. Nach Einschalten der Spannungsversorgung für die Hauptbetriebseinheit werden die gespeicherten Betriebszustandsdaten zur Durchführung des Betriebs der Kommunikationseinrichtung während der folgenden Betriebsperlode aus dem Statusspeicher zur Hauptbetriebseinheit übertragen. Zu einem Zeitpunkt nach dem Einschalten der Spannungsversorgung der Hauptbetriebseinheit wird ein Zeitindikator in Form einer Signalflanke erzeugt. Der zeitliche Abstand des Zeitindikators vom Anfangszeitpunkt der folgenden Betriebsperiode von der Hauptbetriebseinheit wird gemessen. Wenn im Vergleich mit einem vorgegebenen Sollwert der Zeitindikator relativ zum Anfangszeitpunkt der folgenden Betriebsperiode in Richtung früh verschoben ist, wird die vorgegebene Wartezeit vergrößert. Wenn im Vergleich mit einem vorgegebenen Sollwert der Zeitindikator relativ zum Anfangszeitpunkt der folgenden Betriebsperiode in Richtung spät verschoben ist, wird die vorgegebene Wartezeit verringert.

Erfindungsgemäß ist also vorgesehen, dass die für den einwandfreien Betrieb der Kommunikationseinrichtung erforderlichen Betriebszustandsdaten in einem hierfür vorgesehenen Statusspeicher gespeichert werden, der einer Untereinheit zugeordnet ist, so dass die Spannungsversorgung für die Hauptbetriebseinheit vollständig abgeschaltet werden kann, da nur noch die Untereinheit mit dem Statusspeicher mit Spannung versorgt zu werden braucht. Nach dem Einschalten der Spannungsversorgung für die nächste Betriebsperiode werden dann einfach die gespeicherten Betriebszustandsdaten zur Hauptbetriebseinheit zurück übertragen, so dass diese zu Beginn der nächsten Betriebsperiode wieder ihre volle Funktionalität besitzt.

Eine zweckmäßige Weiterbildung der Erfindung zeichnet sich dadurch aus, dass sowohl die Speicherung der Betriebszustandsdaten als auch die Überwachung des Einschaltzeitpunkts also in der Untereinheit ausgeführt werden, die speziell für einen niedrigen Energieverbrauch ausgelegt werden kann, ohne die Betriebszuverlässigkeit der Kommunikationseinrichtung zu beeinträchtigen.

Besonders vorteilhaft ist es, wenn der erfindungsgemäß vorgesehene Zeitindikator, der nach dem Einschalten der Hauptbetriebseinheit erzeugt wird, in einem festen zeitlichen Abstand vor dem Beginn der folgenden Betriebsperiode liegt. Durch Erfassen des tatsächlichen zeitlichen Abstands des Zeitindikators vom Beginn der nächsten Betriebsperiode, der beispielsweise bei einer untergeordneten Kommunikationseinrichtung durch ein äußeres Ereignis, wie z.B. einen empfangenen Burst, festgelegt sein kann, lässt sich der tatsächliche Anfangszeitpunkt der folgenden Betriebsperiode mit dem vorausgesetzten Anfangszeitpunkt vergleichen, um durch eine Verlängerung oder Verkürzung des Energiesparmodus den tatsächlichen Abstand zwischen Zeitindikator und Beginn der folgenden Betriebsperiode auf den vorgegebenen Abstand einzustellen. Ist der Beginn einer Betriebsperiode jedoch unabhängig von einem äußeren Ereignis, so beginnt die folgende Betriebsperiode, in der beispielsweise ein Sendebetrieb durchgeführt wird, nach Ablauf einer vorgegebenen vom Zeitindikator an gerechneten Zeit. Bei dem erfindungsgemäß vorgesehenen Zeitindikator handelt es sich somit um einen Zeitindikator der Absolutzeit, der sowohl zum Festlegen des Beginns von Betriebsperioden als auch zum Festlegen der Dauer des Energiesparmodus genutzt werden kann.

Dabei ist insbesondere vorgesehen, dass der zeitliche Abstand des Zeitindikators vom Anfangszeitpunkt der folgenden Betriebsperiode von der Hauptbetriebseinheit gemessen wird, um bei einer Kommunikationseinrichtung, deren Hauptbetriebseinheit periodisch arbeitet, die Dauer der effektiven Abschaltzeit der Hauptbetriebseinheit zu optimieren. Insbesondere bei einem Untermodul einer mobilen Telekommunikationseinheit, das nur während bestimmter Zeitschlitze arbeitet, deren zeitlicher Abstand durch das verwendete Kommunikationsprotokoll bzw. den verwendeten Standard bestimmt ist, wird es ermöglicht, die Hauptbetriebseinheit zwischen zwei aufeinanderfolgenden Betriebsperioden, also zwischen zwei Zeitschlitzen, möglichst lange im Energiesparmodus zu halten.

Dabei ist es zweckmäßig, wenn der Untereinheit die Wartezeit in Abhängigkeit vom zeitlichen Abstand des Zeitindikators vom Anfangszeitpunkt der folgenden Betriebsperiode von der Hauptbetriebseinheit vorgegeben wird. Dadurch, daß die den Einschaltzeitpunkts festlegende Wartezeit in der Hauptbetriebseinheit ermittelt wird, während in der Untereinheit nur der entsprechende von der Hauptbetriebseinheit gelieferte Wartezeitwert benötigt wird, um den Einschaltzeitpunkt festzustellen, läßt sich die Untereinheit weiter vereinfachen, wodurch ihr Energieverbrauch zusätzlich reduziert werden kann.

Insbesondere ist es erfindungsgemäß möglich, daß die Wartezeit für jede Betriebsperiode neu festgelegt werden kann.

Besonders einfach läßt sich der Einschaltzeitpunkt feststellen, wenn das Ende der Wartezeit in der Untereinheit mit Hilfe eines getakteten Zählers festgestellt wird, dessen laufender Zählwert mit einem der Wartezeit entsprechenden ersten Vergleichswert, also dem Wartezeitwert verglichen wird, der von der Hauptbetriebseinheit zur Untereinheit übertragen wird.

Bei einer weiteren Ausgestaltung der Erfindung ist vorgesehen, daß der Zähler nach Ablauf der Wartezeit neu gestartet wird, daß der laufende Zählerwert mit einem zweiten Vergleichswert verglichen wird, um dem Zeitindikator an die Hauptbetriebseinheit zu liefern, der zum Feststellen des Anfangszeitpunkt der folgenden Betriebsperiode dient.

Der auf diese Weise erzeugt Zeitindikator, der zum Feststellen des Anfangszeitpunkt der folgenden Betriebsperiode benötigt wird, besitzt grundsätzlich einen beliebig fest vorgebbaren, jedoch üblicherweise durch den Schaltungsaufbau fest vorgegebenen zeitlichen Abstand vom Einschaltzeitpunkt der Spannungsversorgung, der dem Ende der Wartezeit entspricht. Durch Anpassen der Wartezeit kann somit der Einschaltzeitpunkt für die Spannungsversorgung der Hauptbetriebseinheit auf den vorbestimmten Zeitpunkt gelegt werden, der einerseits so spät liegt, daß die Zeit zwischen zwei Betriebsperioden optimal für den Energiesparmodus genutzt wird, andererseits aber so früh, daß die Hauptbetriebseinheit genügend Zeit hat, um den stabilen Betrieb ihres schnellen Taktgenerators sicherzustellen und die Betriebszustandsdaten aus dem Statusspeicher für die folgende Betriebsperiode zurückzugewinnen.

Zweckmäßigerweise ist bei dem erfindungsgemäßen Verfahren vorgesehen, daß der Zähler mit Hilfe eines von der Hauptbetriebseinheit gelieferten Software-Rücksetzbefehls gestartet wird. Hierdurch läßt sich in einer Schaltung zur Durchführung des erfindungsgemäßen Verfahrens die Anzahl der Signalleitungen zwischen der Hauptbetriebseinheit und der Untereinheit verringern, da für den Rücksetzbefehl eine Datenleitung benutzt werden kann.

Um für eine weiter verbesserte Ausnutzung des Zeitraums zwischen zwei aufeinanderfolgenden Betriebsperioden die Dauer des Abschalt- bzw. Einschaltvorgangs der Hauptbetriebseinheit möglichst kurz zu halten, ist bei einer besonders bevorzugten Ausgestaltung der Erfindung vorgesehen, daß zum Speichern der Betriebszustandsdaten der Hauptbetriebseinheit im Statusspeicher der Untereinheit und zum Lesen der Betriebszustandsdaten aus dem Statusspeicher ein Taktsignal von der Hauptbetriebseinheit zur Untereinheit übertragen wird. Erfindungsgemäß wird also der schnelle Takt der Hauptbetriebseinheit für das Speichern und Lesen der Betriebszustandsdaten verwendet, so daß sowohl der Abschalt- als auch der Einschaltvorgang nicht unnötig in die Länge gezogen werden.

Zweckmäßigerweise läßt sich das erfindungsgemäße Verfahren einsetzen, wenn die Betriebsperioden der Hauptbetriebseinheit auf regelmäßig wiederkehrende Zeitschlitze abgestimmt sind, während denen die Hauptbetriebseinheit mit einer übergeordneten Kommunikationseinrichtung Daten austauscht, wenn also z.B. die Hauptbetriebseinheit eines Untermoduls einer mobilen Telekommunikationseinheit mit deren Hauptmodul über eine Luftschnittstelle kommuniziert.

Eine andere Weiterbildung der Erfindung zeichnet sich dadurch aus, dass die Jeweils folgende Betriebsperiode durch ein äußeres Ereignis, das zumindest während eines mehrere Betriebsperioden umfassenden Zeitraums In regelmäßigen Abständen auftritt, insbesondere durch einen von der Hauptbetriebseinheit zu empfangenden Burst, also durch ein Signalbündel gestartet wird, wie es beim Zeitmultiplex-Vielfachzugriff verwendet wird.

Das erfindungsgemäße Verfahren lässt sich jedoch auch besonders vorteilhaft bei übergeordneten Kommunikationseinrichtungen einsetzen, die die Betriebsperiode unabhängig von äußeren Ereignissen starten. Dabei ist dann vorgesehen, dass Betriebsperioden jeweils gestartet werden, sobald ihr Anfangszeitpunkt mit Hilfe des Zeitindikators festgestellt wurde.

Eine besonders bevorzugte Ausgestaltung der Erfindung zeichnet sich dadurch aus, dass die Hauptbetriebseinheit ein Einschalt-Haltesignal erzeugt, um ihre Spannungsversorgung nach dem Einschalten während der Betriebsperiode aufrecht zu erhalten und nach Beendigung der Betriebsperiode selbst abzuschalten.

Eine erfindungsgemäße Kommunikationseinrichtung, insbesondere ein Untermodul einer mobilen Telekommunikationseinheit, das während regelmäßig wiederkehrender Zeitschlitze mit einem übergeordneten Hauptmodul Daten austauscht, weist eine Hauptbetriebseinheit zur Ausführung zugewiesener Funktionen und eine Untereinheit auf, die einen Statusspeicher für Betriebszustandsdaten der Hauptbetriebseinheit und einen Zeitschaltkreis aufweist, der die Spannungsversorgung für die Hauptbetriebseinheit steuert. wobei der Zeitschaltkreis ist hierbei eingerichtet, die Spannungsversorgung der Hauptbetriebseinheit nach Ablauf einer jeweils vorgegebenen Wartezeit mittels eines Einschaltsignals einzuschalten, und zu einem Zeitpunkt nach dem Einschalten der Spannungsversorgung der Hauptbetriebseinheit ein Zeitindikator in der Form einer Signalflanke zu erzeugen. Der Zeitschaltkreis ferner eingerichtet ist, den zeitlichen Abstand des Zeitindikators vom Anfangszeitpunkt der folgenden Betriebsperiode von der Hauptbetriebseinheit zu messen. Wenn im Vergleich mit einem vorgegebenen Sollwert der Zeitindikator relativ zum Anfangszeitpunkt der folgenden Betriebsperiode in Richtung früh verschoben ist, wird die vorgegebene Wartezeit vergrößert. Wenn im Vergleich mit einem vorgegebenen Sollwert der Zeitindikator relativ zum Anfangszeitpunkt der folgenden Betriebsperiode in Richtung spät verschoben ist, wird die vorgegebene Wartezeit verringert.

Dabei ist es besonders vorteilhaft, wenn der Zeitschaltkreis einen getakteten Zähler aufweist, dessen Zählerausgang mit einem Eingang einer Vergleichsschaltung verbunden ist, die den Zählerwert vom Zähler mit einem von der Hauptbetriebseinheit festgelegten Vergleichswert vergleicht, um ein Einschaltsignal für die Spannungsversorgung der Hauptbetriebseinheit zu erzeugen, wobei ein Ausgang der Vergleichsschaltung an einen Haltekreis angelegt ist, der das Einschaltsignal für eine Zeitdauer ausgibt.

Dabei ist es zweckmäßig, wenn der Zeitschaltkreis eine zweite Vergleichsschaltung aufweist, die den Zählerwert mit einem zweiten Vergleichswert vergleicht, um der Hauptbetriebseinheit ein Ausgangssignal zuzuführen, das einen Zeitindikator zum Feststellen des Anfangszeitpunkts der folgenden Betriebsperiode der Hauptbetriebseinheit liefert.

Bei einer zweckmäßigen Ausgestaltung der Erfindung ist vorgesehen, daß das Ausgangssignal der zweiten Vergleichsschaltung der Hauptbetriebseinheit über eine Torschaltung als Indikatorsignal zugeführt ist, die von einem Freigabesignal gesteuert ist, das die Art des Einschaltvorgangs anzeigt. Auf diese Weise läßt sich das zur Einstellung der Wartezeit benötigte Indikatorsignal nutzen, um eine weitere Betriebszustandsinformation von der Untereinheit zur Hauptbetriebseinheit zu übertragen, ohne daß hierfür eine zusätzliche Daten- oder Signalleitung erforderlich wäre. Insbesondere kann es sich bei der weiteren Betriebszustandsinformation um die Information darüber handeln, ob die Hauptbetriebseinheit aus einem vollständigen Ausschaltzustand oder aus dem Energiesparmodus heraus eingeschaltet wird.

Um den Energieverbrauch der Kommunikationseinrichtung weiter abzusenken ist vorgesehen, daß der Zähler der Untereinheit von einem Taktgenerator getaktet ist, der in einer weiteren elektronischen Einrichtung integriert ist, der die Kommunikationseinrichtung zugeordnet ist. Durch die Verwendung eines externen Taktgenerators, der in einer weiteren, der Kommunikationseinrichtung zugeordneten elektronischen Einrichtung vorgesehen ist, wird die Anzahl der während des Energiesparmodus aktivierten Verbraucher in der Untereinheit weiter verringert. Insbesondere benötigt die Untereinheit keinen Spannungsregler, so daß durch Weglassen dieses üblicherweise im Energiesparmodus größten Verbrauchers eine erhebliche Absenkung des Energieverbrauchs erreicht wird.

Außerdem läßt sich dabei die Untereinheit von der Hauptbetriebseinheit getrennt in der weiteren elektronischen Einrichtung anordnen, so daß für die Spannungsversorgung der Untereinheit die Spannungsquelle der weiteren Kommunikationseinrichtung genutzt werden kann. Somit wird die Batterie oder der Akkumulator der Kommunikationseinrichtung weiter entlastet.

Für ein schnelles Speicher und Lesen der Betriebszustandsdaten ist es zweckmäßig, wenn zum Datenaustausch zwischen der Hauptbetriebseinheit und der Untereinheit ein Bus mit einer Taktsignalleitung und einer Datenleitung vorgesehen ist, so daß zum Speichern und Lesen der Betriebszustandsdaten im bzw. aus dem Statusspeicher ein schneller Speicher- bzw. Lesetakt zur Untereinheit übertragbar ist.

Die Erfindung wird im folgenden beispielsweise anhand der Zeichnung näher erläutert. Es zeigen:
**Fig. 1** ein schematisches Blockschaltbild einer erfindungsgemäßen Kommunikationseinrichtung,
**Fig. 2** ein schematisches Blockschaltbild eines Zeitschaltkreises der Kommunikationseinrichtung nach Figur 1,
**Fig. 3** ein Zeitdiagramm zur Veranschaulichung der Ausschaltzeiten für eine Hauptbetriebseinheit einer Kommunikationseinrichtung relativ zu ihren Betriebsperioden und
**Fig. 4** eine zeitlich gedehnte Darstellung des Bereichs A in Figur 3.

In den verschiedenen Figuren der Zeichnung sind einander entsprechende Bauelemente und Signale mit gleichen Bezugszeichen versehen.

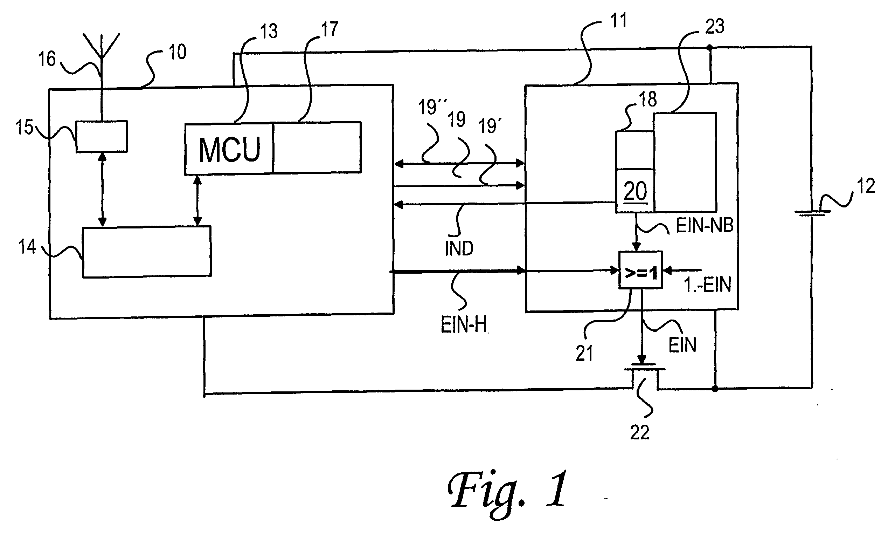

Figur 1 zeigt eine Kommunikationseinrichtung, insbesondere ein Untermodul einer mobilen Telekommunikationseinheit, mit einer Hauptbetriebseinheit 10 und einer Untereinheit 11, die gemeinsam von einer Spannungsquelle 12 versorgt werden. Die Hauptbetriebseinheit 10 weist als Steuereinheit 13 eine Mikrocomputereinheit MCU auf, die einen Funktionsblock 14 für die Durchführung der Datenkommunikation steuert. Der Funktionsblock 14 ist mit einem Sende/Empfangskreis 15 verbunden, an den eine Antenne 16 angeschlossen ist. Zur Steuerung der Abschalt- und Einschaltvorgänge der Hauptbetriebseinheit 10 ist ein Energiesparmodus-Steuerkreis 17 vorgesehen, der im folgenden kurz als Modus-Steuerkreis 17 bezeichnet wird.

Die Untereinheit 11 weist einen Statusspeicher 18 auf, in dem Betriebszustandsdaten der Hauptbetriebseinheit 10 gespeichert werden, wenn deren Spannungsversorgung vollständig abgeschaltet ist. Ein Bus 19 mit einer Taktsignalleitung 19' und einer Datenleitung 19" verbindet die Hauptbetriebseinheit 10 mit der Untereinheit 11, um Betriebszustandsdaten und Steuerdaten zwischen der Hauptbetriebseinheit 10 und der Untereinheit 11 austauschen zu können. Zur Überwachung des Einschaltzeitpunkts der Hauptbetriebseinheit 10 ist in der Untereinheit 11 ein Zeitschaltkreis 20 vorgesehen, der ein Einschaltsignal EIN-NB zum Wiedereinschalten der Hauptbetriebseinheit 10 für die nächste Betriebsperiode an ein ODER-Gatter 21 liefert, dessen Ausgangssignal als Einschaltsignal EIN einen Schalter 22 in der Spannungsversorgung der Hauptbetriebseinheit 10 ansteuert. Dem ODER-Gatter 21 ist außerdem ein Einschalt-Haltesignal EIN-H von der Hauptbetriebseinheit 10 zugeführt. Schließlich kann an einen dritten Eingang des ODER-Gatters 21 ein Einschaltsignal 1.-EIN zugeführt werden, um die Kommunikationseinrichtung erstmalig einzuschalten.

Außerdem weist die Untereinheit 11 einen Steuerkreis 23 auf, der, soweit erforderlich, die Übernahme von Informationen und Daten von der Hauptbetriebseinheit 10 sowie deren Weiterleitung an den Zeitschaltkreis 20 steuert.

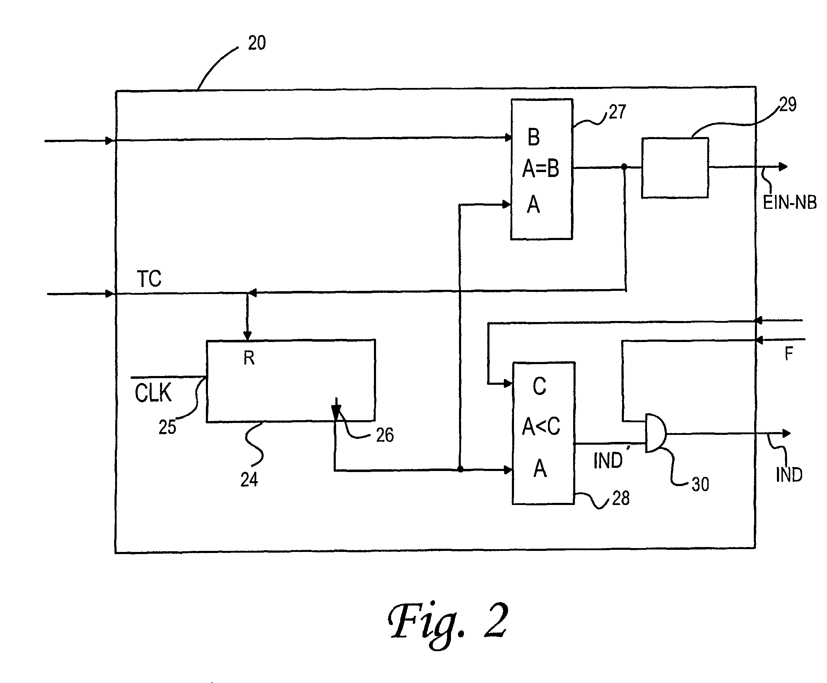

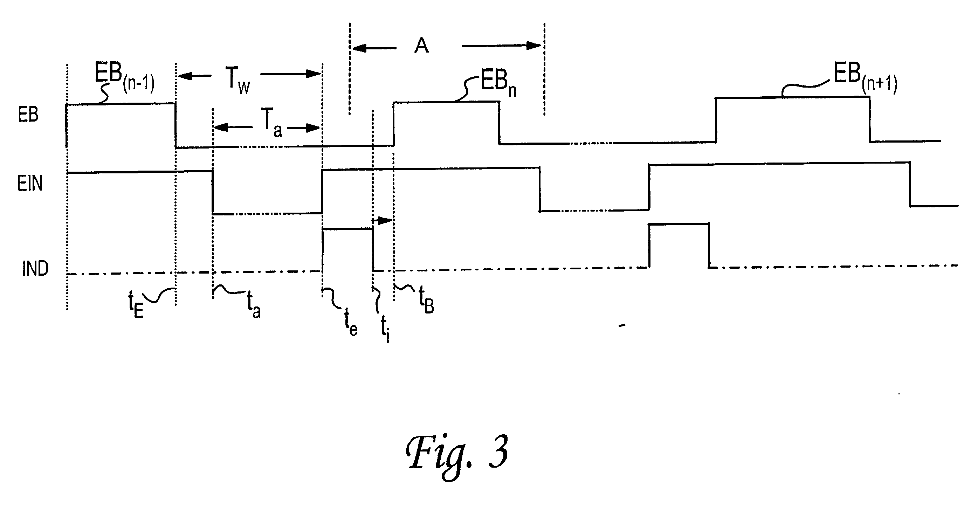

Wie in Figur 2 dargestellt, umfaßt der Zeitschaltkreis 20 einen Zähler 24, der an einen Eingang 25 angelegte Taktsignale CLK zählt und der über einen Ausgang 26 den jeweils aktuellen Zählerwert A an eine erste und eine zweite Vergleichsschaltung 27 bzw. 28 liefert. Der ersten Vergleichsschaltung 27 wird von dem Modus-Steuerkreis 17 der Hauptbetriebseinheit 10 über den Bus 19 und den Steuerkreis 23 ein der Wartezeit T_{w} (siehe Figur 3) zwischen dem Rücksetzen des Zählers 24 und dem Einschaltzeitpunkt tₑ entsprechender Einschaltzeitwert B zugeführt, mit dem der jeweils aktuelle Zählerwert A des Zählers 24 verglichen wird. Das Rücksetzen des Zählers 24 kann, wie in Figur 3 dargestellt, mit dem Ende t_{E} des der letzten Betriebsperiode EB(n-1) zusammenfallen. Im Hinblick auf einen möglichst langen Energiesparmodus ist es jedoch vorteilhaft, den Zähler 24 bereits zu einem fest vorgegebenen Zeitpunkt vor Abschluß der laufenden Betriebsperiode neu zu starten.

Wenn der aktuelle Zählerwert A des Zählers 24 gleich dem Einschaltzeitwert B ist, gibt die erste Vergleichsschaltung 27 ein entsprechendes Signal an einen Haltekreis 29 aus, der das Einschaltsignal EIN-NB für eine Zeit (T_{e,max} + Δ Tₑ) an das ODER-Gatter 21 liefert. Gleichzeitig wird das Ausgangssignal der ersten Vergleichsschaltung 27 an den Rücksetzeingang R des Zählers 24 angelegt, um diesen zurückzusetzen. Neben dem Rücksetzsignal von der ersten Vergleichsschaltung 27 wird dem Zähler 24 auch noch ein Rücksetzsignal TC, das vorzugsweise ein Software-Befehl sein kann, von dem Modus-Steuerkreis 17 über den Bus 19 und den Steuerkreis 23 zugeführt, um ihn jeweils gegen Ende einer Betriebsperiode EBn der Hauptbetriebseinheit 10 zur Überwachung des Einschaltzeitpunkts für die nächste Betriebsperiode EB(n+1) zurückzusetzen.

Die zweite Vergleichsschaltung 28 erhält über den Steuerkreis 23 ein Indikatorzeitwert C und erzeugt ein logisches Signal IND', das über eine beispielsweise als UND-Gatter ausgebildete Torschaltung 30 als logisches Signal IND an die Hauptbetriebseinheit 10 geliefert wird. Das Signal IND' ist solange logisch "1", wie der aktuelle Zählerwert A kleiner als der Indikatorzeitwert C ist. Sobald der aktuelle Zählerwert größer wird als der Indikatorzeitwert C nimmt das Signal IND' den Wert logisch "0" an. Die Torschaltung 30 wird von einem Freigabesignal F freigegeben, sobald die Kommunikationseinrichtung das erste Mal eingeschaltet wurde. Somit wird nach dem erstmaligen Einschalten der Kommunikationseinrichtung das von der zweiten Vergleichsschaltung 28 gelieferte Signal IND' als Indikatorsignal IND von der Torschaltung 30 an die Hauptbetriebseinheit 10 weitergeleitet.

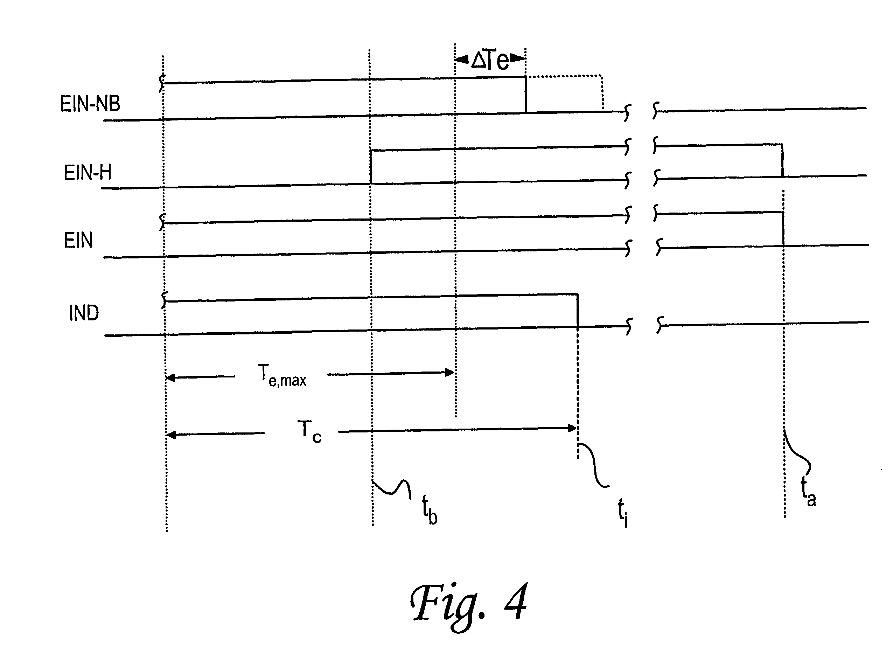

Im folgenden wird anhand von Figur 3 und 4 die Durchführung des erfindungsgemäßen Verfahrens bei der anhand von Figur 1 und 2 beschriebenen Kommunikationseinrichtung erläutert.

Wie der in Figur 3 dargestellte Verlauf des Einschaltsignals EIN relativ zu den einzelnen Betriebsperioden EB zeigt, wird die Spannungsversorgung der Hauptbetriebseinheit 10 zwischen den einzelnen Betriebsperioden EB abgeschaltet, um den Energieverbrauch möglichst gering zu halten. Die einzelnen Betriebsperioden EB können beispielsweise durch einzelne Empfangsbursts festgelegt werden, also durch Signalbündel, wie sie beim Zeitmultiplex-Vielfachzugriffverfahren verwendet werden.

Zum Abschalten der Hauptbetriebseinheit 10 wird gegen Ende der jeweiligen Betriebsperiode EB vom Modus-Steuerkreis 17 ein Rücksetzsignal TC über die Datenleitung 19" des Busses 19 und den Steuerkreis 23 der Untereinheit 11 an den Zeitschaltkreis 20 ausgegeben, das den Zähler 24 zurückzusetzt, was einem Starten des Zählers 24 entspricht. Der Ausgang der ersten Vergleichsschaltung 27 und der Ausgang des Haltekreises 29 liefern weiterhin den Wert logisch "0", während das Signal IND' der zweiten Vergleichsschaltung 28 den Wert logisch "1" annimmt. Da während des normalen Betriebs der Kommunikationseinrichtung das Freigabesignal F den Wert logisch "1" besitzt, ist die Torschaltung 30 freigegeben und gibt das Signal IND' der zweiten Vergleichsschaltung 28 unverändert als Indikatorsignal IND an die Hauptbetriebseinheit 10 aus.

Bei dem dargestellten Ausführungsbeispiel werden nach dem Einschalten der Spannungsversorgung, das hier gleichzeitig mit dem Rücksetzen des Zählers 24 erfolgt, die für die nächste Betriebsperiode relevanten Betriebszustandsdaten der Hauptbetriebseinheit 10 über den Bus 19 zur Untereinheit 11 übertragen, um dort im Statusspeicher 18 gespeichert zu werden. Um einen schnellen Speicherbetrieb zu ermöglichen, wird gleichzeitig mit den über die Datenleitung 19" des Busses 19 übertragenen Daten ein Taktsignal über die Taktsignalleitung 19' des Busses 19 gesendet, das das Einschreiben der Betriebszustandsdaten in den Statusspeicher 18 taktet.

Als Taktsignal kann hierbei das von einem schnellen Taktgenerator erzeugte schnelle Taktsignal der Hauptbetriebseinheit 10 verwendet werden, dessen Frequenz üblicherweise im MHz-Bereich liegt. Nachdem sämtliche Betriebszustandsdaten im Statusspeicher 18 gesichert sind, wird das als Selbsthaltesignal dienende Einschalt-Haltesignal EIN-H auf den Wert logisch "0" gesetzt, so daß zum Zeitpunkt tₐ auch das Ausgangssignal EIN des ODER-Gatters 21 den Wert "0" annimmt. Somit wird der die Spannungsversorgung der Hauptbetriebseinheit 10 schaltende Schalter 22 in seinen nicht leitenden Zustand versetzt. Damit ist die Hauptbetriebseinheit 10 vollständig abgeschaltet und die Spannungsquelle 12 braucht nur noch die Untereinheit 11 zu versorgen.

Jetzt brauchen also nur noch der Statusspeicher 18, der Zeitschaltkreis 20 und der Steuerkreis 23, der den Indikatorzeitwert C und das Freigabesignal F liefert, sowie ein nicht näher dargestellter, relativ langsamer Taktgenerator, der im beispielsweise kHz-Bereich arbeitet mit Spannung versorgt zu werden. Der relativ langsame, also mit niedriger Frequenz arbeitende Taktsignalgenerator, der beispielsweise mit 32 kHz arbeitet, ermöglicht einen relativ geringen Energieverbrauch, da es bei der Erfindung nicht auf die absolute Genauigkeit der Frequenz des Taktsignalgenerators ankommt, so daß er auch mit einer ungeregelten Spannung betrieben werden kann. Der verringerte Energieverbrauch ergibt sich dabei insbesondere durch den Verzicht auf einen Spannungsregler, da Spannungsregler infolge ihrer Ruheströme üblicherweise einen relativ hohen Stromverbrauch bewirken.

Sobald der getaktete Zähler 24 einen Zählerwert A liefert, der gleich dem entsprechenden Wartezeitwert B ist und damit die Einschaltzeit tₑ festlegt, nimmt das Ausgangssignal der ersten Vergleichsschaltung 27 den Wert "1" an, so daß auch das Ausgangssignal EIN-NB des Haltekreises 29 den Wert "1" annimmt, der für eine anhand von Figur 4 noch näher zu beschreibende Zeitdauer gehalten wird. Das Ausgangssignal EIN-NB des Haltekreises 29 wird über das ODER-Gatter 21 als Einschaltsignal EIN an den Schalter 22 angelegt, so daß die Spannungsversorgung für die Hauptbetriebseinheit 10 eingeschaltet wird. Gleichzeitig wird der Zähler 24 zurückgesetzt. Damit nimmt das Signal IND' der zweiten Vergleichsschaltung 28 einen Wert logisch "1" an, da der Zählerwert A des Zählers 24 nach dem Rücksetzen kleiner als der Indikatorzeitwert C ist. Das Signal IND' wird über die Torschaltung 30 als Indikatorsignal IND an die Hauptbetriebseinheit 10 geliefert, da das Freigabesignal F in dem beschriebenen Fall, bei dem es sich um ein Wiedereinschalten aus einem Wartezustand oder Schlafmodus handelt, die Torschaltung 30 freigibt.

Falls jedoch das Einschalten aus einem völlig abgeschalteten Zustand erfolgt, wird die Torschaltung 30 vom Freigabesignal F, das dann den Wert logisch "0" besitzt, gesperrt, so daß auch das Indikatorsignal IND den Wert logisch "0" annimmt.

Nachdem nach dem Einschalten der Spannungsversorgung die Grundfunktionen der Hauptbetriebseinheit 10 aktiviert sind und insbesondere der schnelle Taktgenerator im stabilen Zustand arbeitet, wird zunächst vom Modus-Steuerkreis 17 festgestellt, ob die Hauptbetriebseinheit 10 aus einem vollständigen Ausschaltzustand (IND = logisch "0") oder aus dem Energiesparmodus (IND = logisch "1") eingeschaltet wurde. Hierzu wird das Indikatorsignal IND abgefragt, das wie in Figur 3 gezeigt, nach dem Einschaltzeitpunkt tₑ den Wert "1" besitzt. Somit werden über den Bus 19 die Betriebszustandsdaten aus dem Statusspeicher 18 ausgelesen, wobei als Lesetakt wieder der vom schnellen Taktgenerator der Hauptbetriebseinheit 10 erzeugte schnelle Takt von beispielsweise 18 MHz dient. Sobald alle erforderlichen Betriebszustandsdaten gelesen und andere daraus regenerierbare Betriebsparameter für die folgende Betriebsperiode EBn erzeugt wurden, ist der Einschaltvorgang der Hauptbetriebseinheit 10 abgeschlossen. Das von der Hauptbetriebseinheit 10 an das ODER-Gatter 21 der Untereinheit 11 gelieferte Einschalt-Haltesignal EIN-H nimmt nun den Wert logisch "1" an, um den Schalter 22 unabhängig vom Ausgangssignal des Zeitschaltkreises 20 eingeschaltet zu halten.

Wenn also nach Beendigung des Einschaltvorgangs für die Hauptbetriebseinheit 10 zum Zeitpunkt t_{b} (siehe Figur 4) das Einschalt-Haltesignal EIN-H den Wert "1" annimmt, kann das Einschaltsignal EIN-NB für die nächste Betriebsperiode wieder "0" werden. Um auch bei Schwankungen der ZeitdauerTₑ für den Einschaltvorgang der Hauptbetriebseinheit 10 die Spannungsversorgung zu gewährleisten, hält der Haltekreis 29 das Einschaltsignal EIN-NB für die nächste Betriebsperiode EBn solange auf dem Wert logisch "1", bis nach Ablauf der maximalen Zeitdauer Tₑ, ₘₐₓ für den Einschaltvorgang der Hauptbetriebseinheit 10 noch eine Zeit Δ Tₑ abgelaufen ist. Somit ist sichergestellt, daß auch in dem Fall, in dem der Einschaltvorgang der Hauptbetriebseinheit 10 die hierfür maximal zulässige Zeit T_{e, max} in Anspruch nimmt, die Spannungsversorgung der Hauptbetriebseinheit 10 eingeschaltet bleibt, da die beiden zur Bildung des Einschaltsignals EIN am ODER-Gatter 21 anliegenden Signale EIN-NB und EIN-H zumindest für die Zeitdauer Δ Tₑ gleichzeitig am ODER-Gatter 21 anliegen.

Um die tatsächliche Ausschaltzeit Tₐ zwischen zwei aufeinanderfolgenden Betriebsperioden EB(n-1) und EBn möglichst lang zu machen und so möglichst viel Energie zu sparen, wird von dem Modus-Steuerkreis 17 die Lage des Einschaltzeitpunkts tₑ relativ zum Zeitpunkt t_{B} des tatsächlichen Beginns der folgenden Betriebsperiode, die beispielsweise bei einerTelekommunikationseinrichtung durch das Eintreffen eines Bursts gekennzeichnet ist, überwacht. Hierzu wird das Indikatorsignal IND benutzt, das zum Zeitpunkt tᵢ, wenn der Zählerwert A des Zählers 24 gleich dem Indikatorzeitwert C wird, vom Wert "1" zum Wert "0" wechselt. Dieser Übergang, also die fallende Flanke des Indikatorsignals IND zum Zeitpunkt tᵢ dient als Zeitindikator, der über den Indikatorzeitwert C dem Einschaltzeitpunkt tₑ zugeordnet ist. Der Indikatorzeitwert C entspricht somit der Zeit (tᵢ-tₑ) zwischen dem Einschalten der Hauptbetriebseinheit 10, also dem Rücksetzen des Zählers 24 und dem Erreichen des Indikatorzeitwerts C.

Der zeitliche Abstand zwischen der fallenden Flanke des Indikatorsignals IND zum Zeitpunkt tᵢ und dem Auftreten des nächsten Bursts, dessen Beginn den Beginn t_{B} der nächsten Betriebsperiode EBn kennzeichnet, wird beispielsweise mittels eines vom schnellen Taktgenerator der Hauptbetriebseinheit 10 getakteten Zählers des Modus-Steuerkreises 17 erfaßt, und mit einem vorgegebenen Sollwert (t_{B}-tᵢ)ₛₒₗₗ verglichen. Der Sollwert wird dabei, wie in Figur 3 im Zusammenhang mit der Betriebsperiode EBn dargestellt, positiv gewählt.

Zeigt der jeweils aktuell erfaßte zeitliche Abstand (t_{B}-tᵢ) der fallenden Flanke des Indikatorsignals IND vom Beginn der zugeordneten Betriebsperiode im Vergleich mit dem vorgegebenen Sollwert (t_{B}-tᵢ)ₛₒₗₗ an, daß dieser Zeitindikator relativ zum Anfangszeitpunkt der nächsten Betriebsperiode in Richtung "früh" verschoben ist, so kann die Wartezeit T_{w} vom Ende (t_{E}) einer Betriebsperiode EB(n-1) bis zum Einschaltzeitpunkt tₑ der nächsten Betriebsperiode EBn vergrößert werden, indem der Einschaltzeitwert B erhöhtwird. Umgekehrtwird der Einschaltzeitwert B verringert, wenn der Zeitindikator anzeigt, daß der gewünschte Einschaltzeitpunkt tₑ in Richtung "spät" gegenüber dem Anfangszeitpunkt t_{B} der nächsten Betriebsperiode EBn verschoben ist.

Die Überwachung des zeitlichen Abstands (t_{B}-tᵢ) zwischen Zeitindikator und dem tatsächlichen Beginn (t_{B}) der nächsten Betriebsperiode ermöglicht es insbesondere einen relativ einfachen Zähler 24 zu verwenden, der mit einer beliebigen aber konstanten Frequenz getaktet wird. Hierfür kann ein relativ einfacher Taktgenerator verwendet werden kann, der keine geregelte Spannung benötigt, so daß auf einen Spannungsregler verzichtet werden kann. Abweichungen der Taktfrequenz gegenüber einem Nominalwert können durch die Überwachung des mit Hilfe des Indikatorsignals IND erzeugten Zeitindikators ausgeglichen werden. Das Einsparen eines Spannungsreglers für die Untereinheit 11 ermöglicht es, deren Energieverbrauch weiter zu senken.

Der Zeitindikator läßt sich nicht nur bei untergeordneten Kommunikationseinrichtungen einsetzen, bei denen die Betriebsperioden durch äußere Ereignisse gestartet werden, sondern auch bei übergeordneten Kommunikationseinrichtungen, um den Beginn der jeweils folgenden Betriebsperiode festzulegen. In diesem Fall wird die nach dem Auftreten des Zeitindikators ablaufende Zeit erfaßt und mit dem Sollwert (t_{B}-tᵢ)ₛₒₗₗ für den zeitlichen Abstand zwischen dem Zeitindikator und dem Anfangszeitpunkt t_{B} der folgenden Betriebsperiode verglichen. Sobald die Zeit den Sollwert erreicht, wird die folgende Betriebsperiode EB gestartet. Um dabei Abweichungen der Taktfrequenz für den Zähler 24 vom Nominalwert ausgleichen zu können, wird der den Zähler 24 taktende Taktgenerator mit dem schnellen Taktgenerator der Hauptbetriebseinheit 10 verglichen.

Hierzu werden vorzugsweise nach der Inbetriebnahme der Kommunikationseinrichtung Meß- und Überwachungszyklen durchgeführt, bei denen gegen Ende einer Betriebsperiode EB der Zähler 24 der Untereinheit 11 gestartet wird, ohne daß jedoch die Spannungsversorgung für die Hauptbetriebseinheit 10 abgeschaltet wird. Sobald nach dem Einschaltzeitpunkt tₑ zum Zeitpunkt tᵢ der Zeitindikator, also die fallende Flanke des Indikatorsignals IND erfaßt wird, wird der Zählwert eines schnellen Zählers der Hauptbetriebseinheit 10 erfaßt und als Nominalwert gespeichert. Im Normalbetrieb wird dann nach dem Einschalten der Spannungsversorgung für die Hauptbetriebseinheit 10 deren schneller Zähler auf diesen Nominalwert gesetzt, sobald der Zeitindikator festgestellt wird.

In einem Überwachungszyklus kann der zum Zeitpunkt tᵢ des Zeitindikators vorliegende Zählwert mit dem Nominalwert verglichen werden, der bei Auftreten des Zeitindikators vorliegen sollte, um entsprechend diesem Vergleich den Wartezeitwert B für die erste Vergleichsschaltung 27 des Zeitschaltkreises 20 so zu ändern, daß der Zeitindikator jeweils zur vorbestimmten absoluten Zeit erzeugt wird.

Durch die Verknüpfung des Indikatorsignals IND, das beispielsweise mit seiner fallenden Flanke einen Zeitindikator liefert, mit dem die Art des erforderlichen Einschaltvorgangs anzeigenden Freigabesignals F wird es ermöglicht, zwei Informationen für die Steuerung des Umschaltens vom Energiesparmodus in den normalen Betriebszustand über eine einzelne Leitung von der Untereinheit 11 zur Hauptbetriebseinheit 10 zu übertragen.

Außerdem ermöglicht der Einsatz eines Busses 19 mit einer Datenleitung 19" und einer Taktleitung 19' die Verbindung zwischen Hauptbetriebseinheit 10 und Untereinheit 11 schaltungstechnisch äußerst einfach zu gestalten, so daß es nicht nur möglich ist, die Untereinheit 11 innerhalb der Kommunikationseinrichtung hinsichtlich der Spannungsversorgung von der Hauptbetriebseinheit 10 zu trennen, sondern die Untereinheit 11 auch getrennt von der Hauptbetriebseinheit 10 in einer dieser zugeordneten Kommunikationseinrichtung vorzusehen, die im Dauerbetrieb arbeitet. Durch die Verwendung des schnellen Takts der Hauptbetriebseinheit 10 zum Speichern und Lesen der Betriebszustandsdaten in und aus dem Statusspeicher 18 kann die Zeit (tₐ-t_{E}) zwischen dem Ende einer Betriebsperiode EB und dem Abschalten der Spannungsversorgung für die Hauptbetriebseinheit 10 sowie die Einschaltzeit Tₑ kurz gehalten werden, so daß die effektive Ausschaltzeit Tₐ der Hauptbetriebseinheit 10 zwischen zwei aufeinanderfolgenden Betriebsperioden EB groß wird.

## Patentansprüche

1. Verfahren zum Steuern einer Kommunikationseinrichtung, die eine Hauptbetriebseinheit (10) und eine Untereinheit (11) aufweist,
bei der nach einer Betriebsperiode (EBn) Betriebszustandsdaten der Hauptbetriebseinheit (10) in einem Statusspeicher (18) der Untereinheit (11) gespeichert werden und danach die Spannungsversorgung der Hauptbetriebseinheit (10) abgeschaltet wird, um die Kommunikationseinrichtung in einen Energiesparmodus zu versetzen, und
bei der nach Einschalten der Spannungsversorgung für die Hauptbetriebseinheit (10) die gespeicherten Betriebszustandsdaten zur Durchführung des Betriebs der Kommunikationseinrichtung während einer folgenden Betriebsperiode (EB(n+1)) aus dem Statusspeicher (18) zur Hauptbetriebseinheit (10) übertragen werden,
wobei die Spannungsversorgung der Hauptbetriebseinheit (10) nach Ablauf einer jeweils vorgegebenen Wartezeit (T_{w}) mittels eines Einschaltsignals (EIN-NB) von der Untereinheit (11) eingeschaltet wird,
wobei zu einem Zeitpunkt (tᵢ) nach dem Einschalten der Spannungsversorgung der Hauptbetriebseinheit (10) ein Zeitindikator in Form einer Signalflanke erzeugt wird, **dadurch gekennzeichnet, dass** der zeitliche Abstand t_{B}-tᵢ des Zeitindikators vom Anfangszeitpunkt (t_{B}) der folgenden Betriebsperiode (EB(n+1)) von der Hauptbetriebseinheit (10) gemessen wird, wobei, wenn im Vergleich mit einem vorgegebenen Sollwert, [t_{B}-tᵢ]ₛₒₗₗ der Zeitindikator relativ zum Anfangszeitpunkt (t_{B}) der folgenden Betriebsperiode (EB(n+1)) in Richtung früh verschoben ist, wird die vorgegebene Wartezeit (T_{w}) vergrößert und, wenn in Richtung spät verschoben, wird die vorgegebene Wartezeit (T_{w}) verringert.

2. Verfahren nach Anspruch 1, **dadurch gekennzeichnet, dass** der Untereinheit (11) die Wartezeit (T_{w}) in Abhängigkeit vom zeitlichen Abstand t_{B}-tᵢ des Zeitindikators vom Anfangszeitpunkt (t_{B}) der folgenden Betriebsperiode (EB(n+1)) von der Hauptbetriebseinheit (10) vorgegeben wird.

3. Verfahren nach Anspruch 2, **dadurch gekennzeichnet, dass** die Wartezeit (T_{w}) für jede Betriebsperiode (EB) neu festgelegt werden kann.

4. Verfahren nach Anspruch 1 bis 3, **dadurch gekennzeichnet, dass** das Ende der Wartezeit (T_{w}) in der Untereinheit (11) mit Hilfe eines getakteten Zählers (24) festgestellt wird, dessen laufender Zählwert (A) mit einem der Wartezeit (T_{w}) entsprechenden ersten Vergleichswert (B) verglichen wird, der von der Hauptbetriebseinheit (10) zur Untereinheit (11) übertragen wird.

5. Verfahren nach Anspruch 4, **dadurch gekennzeichnet, dass** der Zähler (24) nach Ablauf der Wartezeit (T_{w}) neu gestartet wird, dass der laufende Zählerwert (A) mit einem zweiten Vergleichswert (C) verglichen wird, um den Zeitindikator an die Hauptbetriebseinheit (10) zu liefern, der zum Feststellen des Anfangszeitpunkts (t_{B}) der folgenden Betriebsperiode (EB(n+1)) dient.

6. Verfahren nach Anspruch 4 oder 5, **dadurch gekennzeichnet, dass** der Zähler (24) mit Hilfe eines von der Hauptbetriebseinheit (10) gelieferten Software-Rücksetzbefehls (TC) gestartet wird.

7. Verfahren nach einem der vorstehenden Ansprüche 4 bis 6, **dadurch gekennzeichnet, dass** der getaktete Zähler (24) mit einem Taktsignal mit niedriger Frequenz, insbesondere im kHz-Bereich, betrieben wird, wobei ein schneller Zähler in der Hauptbetriebseinheit (10) mit einem Taktsignal mit hoher Frequenz, insbesondere im MHz-Bereich, betrieben wird.

8. Verfahren nach einem der vorstehenden Ansprüche, **dadurch gekennzeichnet, dass** zum Speichern der Betriebszustandsdaten der Hauptbetriebseinheit (10) im Statusspeicher (18) der Untereinheit (11) und zum Lesen der Betriebszustandsdaten aus dem Statusspeicher (18) ein Taktsignal von der Hauptbetriebseinheit (10) zur Untereinheit (11) übertragen wird.

9. Verfahren nach einem der vorstehenden Ansprüche, **dadurch gekennzeichnet, dass** die Betriebsperioden (EBn) der Hauptbetriebseinheit (10) auf regelmäßig wiederkehrende Zeitschlitze abgestimmt sind, während denen die Hauptbetriebseinheit (10) mit einer übergeordneten Kommunikationseinrichtung Daten austauscht.

10. Verfahren nach einem der vorstehenden Ansprüche, **dadurch gekennzeichnet, dass** Betriebsperioden (EBn) durch ein äußeres Ereignis, das zumindest während eines mehrere Betriebsperioden (EBn) umfassenden Zeitraums in regelmäßigen Abständen auftritt, insbesondere durch einen von der Hauptbetriebseinheit (10) zu empfangenden Burst gestartet werden.

11. Verfahren nach einem der vorstehenden Ansprüche, **dadurch gekennzeichnet, dass** Betriebsperioden (EBn) jeweils gestartet werden, sobald ihr Anfangszeitpunkt mit Hilfe des Zeitindikators festgestellt wurde.

12. Verfahren nach einem der vorstehenden Ansprüche, **dadurch gekennzeichnet, dass** die Hauptbetriebseinheit (10) ein Einschalt-Haltesignal (EIN-H) erzeugt, um ihre Spannungsversorgung nach dem Einschalten während der Betriebsperiode (EB) aufrecht zu erhalten und nach Beendigung der Betriebsperiode (EB) selbst abzuschalten.

13. Kommunikationseinrichtung mit einer Hauptbetriebseinheit (10) zur Ausführung zugewiesener Funktionen und mit einer Untereinheit (11), die einen Statusspeicher (18) für Betriebszustandsdaten der Hauptbetriebseinheit (10) von einer Betriebsperiode (EBn) für eine folgende Betriebsperiode (EB(n+1) der Hauptbetriebseinheit (10) und einen Zeitschaltkreis (20) aufweist, der die Spannungsversorgung für die Hauptbetriebseinheit (10) steuert, um die Kommunikationseinrichtung in einen Energiesparmodus zu versetzten,
wobei der Zeitschaltkreis eingerichtet ist,
die Spannungsversorgung der Hauptbetriebseinheit (10) nach Ablauf einer jeweils vorgegebenen Wartezeit (T_{w}) mittels eines Einschaltsignals (EIN-NB) einzuschalten, zu einem Zeitpunkt (tᵢ) nach dem Einschalten der Spannungsversorgung der Hauptbetriebseinheit (10) ein Zeitindikator in der Form einer Signalflanke zu erzeugen,
**dadurch gekennzeichnet, dass** der Zeitschaltkreis ferner eingerichtet ist, den zeitlichen Abstand t_{B}-tᵢ des Zeitindikators vom Anfangszeitpunkt (t_{B}) der folgenden Betriebsperiode (EB(n+1)) von der Hauptbetriebseinheit (10) zu messen, wobei, wenn im Vergleich mit einem vorgegebenen Sollwert [t_{B}-tᵢ]ₛₒₗₗ der Zeitindikator relativ zum Anfangszeitpunkt (t_{B}) der folgenden Betriebsperiode (EB(n+1)) in Richtung früh verschoben ist, wird die vorgegebene Wartezeit (T_{w}) vergrößert und, wenn in Richtung spät verschoben, wird die vorgegebene Wartezeit (T_{w}) verringert.

14. Kommunikationseinrichtung nach Anspruch 13, **dadurch gekennzeichnet, dass** der Zeitschaltkreis (20) einen getakteten Zähler (24) aufweist, dessen Zählerausgang (26) mit einem Eingang einer Vergleichsschaltung (27) verbunden ist, die den Zählerwert (A) vom Zähler (24) mit einem von der Hauptbetriebseinheit (10) festgelegten Vergleichswert (B) vergleicht, um ein Einschaltsignal (EIN-NB) für die Spannungsversorgung der Hauptbetriebseinheit (10) zu erzeugen.

15. Kommunikationseinrichtung nach Anspruch 14, **dadurch gekennzeichnet, dass** ein Ausgang der Vergleichsschaltung (27) an einen Haltekreis (29) angelegt ist, der das Einschaltsignal (EIN-NB) für eine Zeitdauer, T_{e,max}+ΔTₑ ausgibt.

16. Kommunikationseinrichtung nach Anspruch 14 oder 15, **dadurch gekennzeichnet, dass** der Zeitschaltkreis (20) eine zweite Vergleichsschaltung (28) aufweist, die den Zählerwert (A) mit einem zweiten Vergleichswert (C) vergleicht, um der Hauptbetriebseinheit (10) ein Ausgangssignal (IND') zuzuführen, das einen Zeitindikator zum Feststellen des Anfangszeitpunkts (t_{B}) der folgenden Betriebsperiode (EB(n+1)) der Hauptbetriebseinheit (10) liefert.

17. Kommunikationseinrichtung nach Anspruch 16, **dadurch gekennzeichnet, dass** das Ausgangssignal (IND') der zweiten Vergleichsschaltung (28) der Hauptbetriebseinheit (10) über eine Torschaltung (30) als Indikatorsignal (IND) zugeführt ist, die von einem Freigabesignal (F) gesteuert ist, das die Art des Einschaltvorgangs anzeigt.

18. Kommunikationseinrichtung nach den Ansprüchen 13 bis 17, **dadurch gekennzeichnet, dass** der Zähler (24) der Untereinheit (11) von einem Taktgenerator getaktet ist, der in einer weiteren elektronischen Einrichtung integriert ist, der die Kommunikationseinrichtung zugeordnet ist.

19. Kommunikationseinrichtung nach einem der vorstehenden Ansprüche 14 bis 18, **dadurch gekennzeichnet, dass** der getaktete Zähler (24) mit einem Taktsignal mit niedriger Frequenz, insbesondere im kHz-Bereich, betrieben wird, wobei ein schneller Zähler in der Hauptbetriebseinheit (10) mit einem Taktsignal mit hoher Frequenz, insbesondere im MHz-Bereich, betrieben wird.

20. Kommunikationseinrichtung nach den Ansprüchen 13 bis 18, **dadurch gekennzeichnet, dass** zum Datenaustausch zwischen der Hauptbetriebseinheit (10) und der Untereinheit (11) ein Bus (19) mit einer Taktsignalleitung (19') und einer Datenleitung (19") vorgesehen ist, so dass zum Speichern und Lesen der Betriebszustandsdaten im bzw. aus dem Statusspeicher (18) ein schneller Speicher- bzw. Lesetakt zur Untereinheit (11) übertragbar ist.

## Claims

1. Method for controlling a communications device which has a main operating unit (10) and a subunit (11),
in which, after an operating period (EBn), operating state data for the main operating unit (10) are stored in a status memory (18) of the subunit (11) and, after this, the power supply for the main operating unit (10) is switched off in order to put the communications device into an energy saving mode, and
in which, after the power supply for the main operating unit (10) is switched on, the stored operating state data are transmitted from the status memory (18) to the main operating unit (10) for operating the communications device during a following operating period (EB(n+1)), the power supply for the main operating unit (10) being switched on by means of a switch-on signal (EIN-NB) from the subunit (11) after a respectively predetermined waiting time (T_{w}) has elapsed,
a time indicator in the form of a signal edge being produced at a time (tᵢ) after the power supply for the main operating unit (10) has been switched on,
**characterised in that** the time interval t_{B}-tᵢ between the time indicator and the start time (t_{B}) of the following operating period (EB(n+1)) is measured by the main operating unit (10), the predetermined waiting time (T_{w}) being increased if, compared with a predetermined setpoint [t_{B}-tᵢ]ₛₒₗₗ, the time indicator is offset in the early direction relative to the start time (t_{B}) of the following operating period (EB(n+1)), and the predetermined waiting time (T_{w}) being reduced if the time indicator is offset in the late direction.

2. Method according to claim 1, **characterised in that** the waiting time (T_{w}) is predetermined by the main operating unit (10) for the subunit (11) as a function of the time interval t_{B}-tᵢ between the time indicator and the start time (t_{B}) of the following operating period (EB(n+1)).

3. Method according to claim 2, **characterised in that** the waiting time (T_{w}) can be redetermined for each operating period (EB).

4. Method according to claims 1 to 3, **characterised in that** the end of the waiting time (T_{w}) is determined in the subunit (11) using a clocked counter (24) of which the running count (A) is compared with a first comparison value (B) which corresponds to the waiting time (T_{w}) and is transmitted from the main operating unit (10) to the subunit (11).

5. Method according to claim 4, **characterised in that** the counter (24) is restarted after the waiting time (T_{w}) has elapsed, **in that** the running count (A) is compared with a second comparison value (C) in order to supply the time indicator to the main operating unit (10), which time indicator is used to determine the start time (t_{B}) of the following operating period (EB(n+1)).

6. Method according to claim 4 or 5, **characterised in that** the counter (24) is started using a software reset command (TC) which is supplied by the main operating unit (10).

7. Method according to any one of the preceding claims 4 to 6, **characterised in that** the clocked counter (24) is operated using a clock signal having a low frequency, in particular in the kHz range, a fast counter in the main operating unit (10) being operated using a clock signal having a higher frequency, in particular in the MHz range.

8. Method according to any one of the preceding claims, **characterised in that** a clock signal is transmitted from the main operating unit (10) to the subunit (11) for storing the operating state data for the main operating unit (10) in the status memory (18) of the subunit (11) and for reading the operating state data from the status memory (18).

9. Method according to any one of the preceding claims, **characterised in that** the operating periods (EBn) of the main operating unit (10) are coordinated with regula rly recurring time slots during which the main operating unit (10) exchanges data with a higher-level communications device.

10. Method according to any one of the preceding claims, **characterised in that** operating periods (EBn) are started by an external event which occurs at regular intervals at least during a time period which comprises a plurality of operating periods (EBn), in particular by a burst which is to be received by the main operating unit (10).

11. Method according to any one of the preceding claims, **characterised in that** operating periods (EBn) are in each case started as soon as their start time has been determined using the time indicator.

12. Method according to any one of the preceding claims, **characterised in that** the main operating unit (10) produces a switch-on hold signal (EIN-H) in order to maintain its power supply during the operating period (EB) after switching on and to switch itself off after the end of the operating period (EB).

13. Communications device having a main operating unit (10) for carrying out assigned functions and having a subunit (11) which has a status memory (18) for operating state data for the main operating unit (10) from an operating period (EBn) for a following operating period (EB(n+1)) of the main operating unit (10) and a timer circuit (20) which controls the power supply for the main operating unit (10), in order to put the communications device into an energy saving mode,
the timer circuit being set up
to switch on the power supply for the main operating unit (10) by means of a switch-on signal (EIN-NB) after a respective predetermined waiting time (T_{w}) has elapsed,
to produce a time indicator in the form of a signal edge at a time (tᵢ) after the power supply for the main operating unit (10) has been switched on,
**characterised in that** the timer circuit is further set up to measure the time interval t_{B}-tᵢ between the time indicator and the start time (t_{B}) of the following operating period (EB(n+1)) of the main operating unit (10), the predetermined waiting time (T_{w}) being increased if, compared with a predetermined setpoint [t_{B}-tᵢ]ₛₒₗₗ, the time indicator is offset in the early direction relative to the start time (t_{B}) of the following operating period (EB(n+1)), and the predetermined waiting time (T_{w}) being reduced if the time indicator is offset in the late direction.

14. Communications device according to claim 13, **characterised in that** the timer circuit (20) comprises a clocked counter (24), the counter output (26) of which is connected to an input of a comparison circuit (27) which compares the count (A) from the counter (24) with a comparison value (B) determined by the main operating unit (10), in order to produce a switch-on signal (EIN-NB) for the power supply for the main operating unit (10).

15. Communications device according to claim 14, **characterised in that** an output of the comparison circuit (27) is applied to a holding circuit (29) which emits the switch-on signal (EIN-NB) for a time period T_{e,max}+ΔTₑ.

16. Communications device according to claim 14 or 15, **characterised in that** the timer circuit (20) comprises a second comparison circuit (28) which compares the count (A) with a second comparison value (C), in order to supply the main operating unit (10) with an output signal (IND') which provides a time indicator for determining the start time (t_{B}) of the following operating period (EB(n+1)) of the main operating unit (10).

17. Communications device according to claim 16, **characterised in that** the output signal (IND') of the second comparison circuit (28) is supplied to the main operating unit (10) as an indicator signal (IND) via a gate circuit (30) which is controlled by an enable signal (F) which indicates the type of switch-on process.

18. Communications device according to claims 13 to 17, **characterised in that** the counter (24) of the subunit (11) is clocked by a clock generator which is integrated into a further electronic device with which the communications device is associated.

19. Communications device according to any one of the preceding claims 14 to 18, **characterised in that** the clocked counter (24) is operated using a clock signal having a low frequency, in particular in the kHz range, a fast counter in the main operating unit (10) being operated using a clock signal having a higher frequency, in particular in the MHz range.

20. Communications device according to any one of the preceding claims 13 to 18, **characterised in that** a bus (19) having a clock signal line (19') and a data line (19") is provided for data interchange between the main operating unit (10) and the subunit (11), in such a way that a fast storage and reading clock can be transmitted to the subunit (11) for storing and reading the operating state data in and from the status memory (18).

## Revendications

1. Procédé pour commander un dispositif de communication, qui présente une unité d'exploitation principale (10) et une sous-unité (11),
sur laquelle des données d'état de service de l'unité d'exploitation principale (10) sont stockées dans une mémoire d'état (18) de la sous-unité (11) après une période de service (EBn) et l'alimentation en tension de l'unité d'exploitation principale (10) est déconnectée ensuite, afin de mettre le dispositif de communication dans un mode d'économie d'énergie, et
sur laquelle, après la mise en route de l'alimentation en tension pour l'unité d'exploitation principale (10), les données d'état de service stockées pour la mise en oeuvre du fonctionnement du dispositif de communication pendant une période de service suivante (EB(n+1)) sont transmises de la mémoire d'état (18) à l'unité d'exploitation principale (10),
l'alimentation en tension de l'unité d'exploitation principale (10) étant enclenchée après l'écoulement d'un délai d'attente (T_{w}) respectivement prédéfini au moyen d'un signal d'enclenchement (EIN-NB) par la sous-unité (11),
un indicateur de temps étant généré sous la forme d'un flanc de signal à un moment (tᵢ) après l'enclenchement de l'alimentation en tension de l'unité d'exploitation principale (10),
**caractérisé en ce que** l'écart de temps t_{B} - tᵢ entre l'indicateur de temps et le moment initial (t_{B}) de la période de service suivante (EB(n+1)) de l'unité d'exploitation principale (10) est mesuré, sachant que lorsque, par rapport à une valeur de consigne [t_{B} - tᵢ]ₛₒₗₗ prédéfinie, l'indicateur de temps est décalé dans le sens avancé par rapport au moment initial (t_{B}) de la période de service suivante (EB(n+1)), le délai d'attente (T_{w}) prédéfini est augmenté et, lorsqu'il est décalé dans le sens retardé, le délai d'attente (T_{w}) prédéfini est réduit.

2. Procédé selon la revendication 1, **caractérisé en ce que** le délai d'attente (T_{w}) est prédéfini pour la sous-unité (11) en fonction de l'écart de temps t_{B} - tᵢ entre l'indicateur de temps et le moment initial (t_{B}) de la période de service suivante (EB(n+1)) de l'unité d'exploitation principale (10).

3. Procédé selon la revendication 2, **caractérisé en ce que** le délai d'attente (T_{w}) peut être fixé à nouveau pour chaque période de service (EB).

4. Procédé selon les revendications 1 à 3, **caractérisé en ce que** la fin du délai d'attente (T_{w}) dans la sous-unité (11) est fixée à l'aide d'un compteur (24) synchronisé, dont la valeur de comptage (A) continue est comparée avec une première valeur de comparaison (B) correspondant au délai d'attente (T_{w}), laquelle est transmise de l'unité d'exploitation principale (10) à la sous-unité (11).

5. Procédé selon la revendication 4, **caractérisé en ce que** le compteur (24) est redémarré après l'écoulement du délai d'attente (T_{w}), **en ce que** la valeur du compteur (A) continue est comparée avec une seconde valeur de comparaison (C), afin de fournir l'indicateur de temps à l'unité d'exploitation principale (10), qui sert à déterminer le moment initial (t_{B}) de la période de service suivante (EB(n+1)).

6. Procédé selon la revendication 4 ou 5, **caractérisé en ce que** le compteur (24) est démarré à l'aide d'une instruction de réinitialisation de logiciel (TC) fournie par l'unité d'exploitation principale (10).

7. Procédé selon l'une quelconque des revendications précédentes 4 à 6, **caractérisé en ce que** le compteur (24) synchronisé est exploité avec un signal de synchronisation à basse fréquence, en particulier de l'ordre du kHz, un compteur rapide étant utilisé dans l'unité d'exploitation principale (10) avec un signal de synchronisation à fréquence élevée, en particulier de l'ordre du MHz.

8. Procédé selon l'une quelconque des revendications précédentes, **caractérisé en ce qu'**un signal de synchronisation est transmis de l'unité d'exploitation principale (10) à la sous-unité (11) pour le stockage des données d'état de service de l'unité d'exploitation principale (10) dans la mémoire d'état (18) de la sous-unité (11) et pour la lecture de données d'état de service à partir de la mémoire d'état (18).

9. Procédé selon l'une quelconque des revendications précédentes, **caractérisé en ce que** les périodes de service (EBn) de l'unité d'exploitation principale (10) sont adaptées à des créneaux temporels récurrents, pendant lesquelles l'unité d'exploitation principale (10) échange des données avec un dispositif de communication prioritaire.

10. Procédé selon l'une quelconque des revendications précédentes, **caractérisé en ce que** des périodes de service (EBn) sont démarrées par un événement extérieur, qui survient au moins pendant une période comprenant plusieurs périodes de service (EBn) à des intervalles réguliers, en particulier par une salve (burst) à recevoir de l'unité d'exploitation principale (10).

11. Procédé selon l'une quelconque des revendications précédentes, **caractérisé en ce que** des périodes de service (EBn) sont démarrées respectivement dès que leur moment initial a été constaté à l'aide de l'indicateur de temps.

12. Procédé selon l'une quelconque des revendications précédentes, **caractérisé en ce que** l'unité d'exploitation principale (10) génère un signal de maintient d'enclenchement (EIN-H), afin de maintenir son alimentation en tension après l'enclenchement pendant la période de service (EB) et afin de la déconnecter après la fin de la période de service (EB).

13. Dispositif de communication comprenant une unité d'exploitation principale (10) pour l'exécution de fonctions attribuées et une sous-unité (11), qui présente une mémoire d'état (18) pour des données d'état de service de l'unité d'exploitation principale (10) d'une période de service (EBn) pour une période de service suivante (EB(n+1)) de l'unité d'exploitation principale (10) et un circuit temporisé (20), qui commande l'alimentation en tension pour l'unité d'exploitation principale (10), afin de mettre le dispositif de communication dans un mode d'économie d'énergie,
le circuit temporisé étant aménagé
pour enclencher l'alimentation en tension de l'unité d'exploitation principale (10) après l'écoulement d'un délai d'attente (T_{w}) respectivement prédéfini au moyen d'un signal d'enclenchement (EIN-NB),
pour générer un indicateur de temps sous la forme d'un flanc de signal à un moment (tᵢ) après l'enclenchement de l'alimentation en tension de l'unité d'exploitation principale (10),
**caractérisé en ce que** le circuit temporisé est aménagé également pour mesurer l'écart de temps t_{B} - tᵢ entre l'indicateur de temps et le moment initial (t_{B}) de la période de service suivante (EB(n+1)) de l'unité d'exploitation principale (10), sachant que lorsque, par rapport à une valeur de consigne [t_{B} - tᵢ]ₛₒₗₗ prédéfinie, l'indicateur de temps est décalé dans le sens avancé par rapport au moment initial (t_{B}) de la période de service suivante (EB(n+1)), le délai d'attente (T_{w}) prédéfini est augmenté et, lorsqu'il est décalé dans le sens retardé, le délai d'attente (T_{w}) prédéfini est réduit.

14. Dispositif de communication selon la revendication 13, **caractérisé en ce que** le circuit temporisé (20) présente un compteur (24) synchronisé, dont la sortie (26) est reliée à une entrée d'un circuit de comparaison (27), qui compare la valeur (A) du compteur (24) avec une valeur de comparaison (B) fixée par l'unité d'exploitation principale (10), afin de générer un signal d'enclenchement (EIN-NB) pour l'alimentation en tension de l'unité d'exploitation principale (10).

15. Dispositif de communication selon la revendication 14, **caractérisé en ce qu'**une sortie du circuit de comparaison (27) est appliquée sur un circuit de maintien (29) qui émet le signal d'enclenchement (EIN-NB) pour une durée T_{e,max} + ΔTₑ.

16. Dispositif de communication selon la revendication 14 ou 15, **caractérisé en ce que** le circuit temporisé (20) présente un second circuit de comparaison (28), qui compare la valeur de compteur (A) avec une seconde valeur de comparaison (C), afin d'amener à l'unité d'exploitation principale (10) un signal de sortie (IND') qui fournit un indicateur de temps pour la détermination du moment initial (t_{B}) de la période d'exploitation suivante (EB(n+1)) de l'unité d'exploitation principale (10).

17. Dispositif de communication selon la revendication 16, **caractérisé en ce que** le signal de sortie (IND') du second dispositif de comparaison (28) est amené à l'unité d'exploitation principale (10) au moyen d'un circuit de porte (30) comme signal indicateur (IND), qui est commandé par un signal de validation (F) indiquant la nature de l'opération d'enclenchement.

18. Dispositif de communication selon les revendications 13 à 17, **caractérisé en ce que** le compteur (24) de la sous-unité (11) est synchronisé par un générateur de rythme qui est intégré dans un autre dispositif électronique auquel est attribué le dispositif de communication.

19. Dispositif de communication selon l'une quelconque des revendications 14 à 18, **caractérisé en ce que** le compteur (24) synchronisé est exploité avec un signal de synchronisation à basse fréquence, en particulier de l'ordre du kHz, un compteur rapide étant utilisé dans l'unité d'exploitation principale (10) avec un signal de synchronisation à fréquence élevée, en particulier de l'ordre du MHz.

20. Dispositif de communication selon les revendications 13 à 18, **caractérisé en ce qu'**un bus (19) avec une ligne de signalisation de synchronisation (19') et une ligne de données (19") est prévu pour l'échange de données entre l'unité d'exploitation principale (10) et la sous-unité (11) principale, de sorte qu'un rythme de mémoire et/ou de lecture rapide peut être transmis à la sous-unité (11) pour le stockage et la lecture des données d'état de service dans la mémoire d'état (18) ou à partir de cette mémoire d'état.
